# EUROPEAN PATENT APPLICATION

(11) **EP 2 416 537 A1**
(43) Date of publication of application: **08.02.2012**
(21) Application number: 10758055.7
(22) Date of filing: 31.03.2010
(51) Int. Cl.: H04L 29/06

(54) **METHOD FOR QUALITY OF SERVICE CONTROL AND NETWORK DEVICE**

(30) Priority: 03.04.2009 CN 200910106519
(71) Applicant: Huawei Technologies Co., Ltd., Longgang District, Shenzhen Guangdong 518129 (CN)
(72) Inventor: SI, Yuan, Shenzhen Guangdong 518129 (CN)
(74) Representative: Pfenning, Meinig & Partner GbR
(86) International application number: PCT/CN2010/071467
(87) International publication number: WO 2010/111953

(57) **Abstract**

Embodiments of the present invention provide a method for controlling QoS. The method includes: identifying a service type of a user; controlling the QoS for the user according to the identified service type of the user. The embodiments of the present invention also provide a network device. With the method and device provided in the embodiments of the present invention, the QoS may be dynamically adjusted for the user and the actual QoS requirement of the service of the user is satisfied.

## Description

This application claims priority to Chinese patent application No. 200910106519.7, filed with Chinese patent office on April 3, 2009, titled "METHOD AND NETWORK DEVICE FOR CONTROLLING QOS", the content of which is incorporated herein by reference in its entirety.

### FIELD OF THE INVENTION

The present invention relates to communications technologies, and in particular, to quality of service (QoS) technologies.

### BACKGROUND OF THE INVENTION

A mobile telecommunication network is a shared network. Multiple users share network resources (including transmit power and transmission bandwidth). User mobility and a sudden service cause the aggregate demands of a user to change in real time. However, network resources are fixed and relatively limited. Therefore, QoS cannot be always guaranteed for the user on the mobile telecommunication network.

In the prior art, once a user accesses the network, the QoS is determinate. When services of the user changes, the QoS does not change; the QoS may change only if the user accesses the network again. The determinate QoS cannot accommodate the actual QoS requirements of the services.

### SUMMARY OF THE INVENTION

Embodiments of the present invention provide a method for controlling QoS and a network device for controlling the QoS for a user according to a service type of the user. Therefore, the actual QoS requirement of a service of the user may be satisfied.

An embodiment of the present invention provides a method for controlling QoS, including:
identifying a service type of a user; and
controlling the QoS for the user according to the identified service type of the user.

An embodiment of the present invention provides a network device, including:
an identifying unit, configured to identify a service type of a user; and
a controlling unit, configured to control QoS for the user according to the identified service type of the user.

According to the method and device provided in embodiments of the present invention, the service type of the user can be identified, and QoS for the user can be controlled according to the identified service types, thus the QoS may be dynamically adjusted for the user. Therefore, the actual QoS requirement of the service of the user may be satisfied.

### BRIEF DESCRIPTION OF THE DRAWINGS

FIG. 1 is a flow chart of a method for controlling QoS according to an embodiment of the present invention;
FIG. 2 is a flow chart of a method for controlling QoS according to another embodiment of the present invention;
FIG. 3 is a flow chart of a method for controlling QoS according to another embodiment of the present invention;
FIG. 4 is a schematic structural diagram of a network device according to an embodiment of the present invention;
FIG. 5 is a schematic structural diagram of a network device according to another embodiment of the present invention;
FIG. 6 is a flow chart of a method for controlling QoS according to another embodiment of the present invention; and
FIG. 7 is a schematic structural diagram of an apparatus for identifying a service type of a user according to an embodiment of the present invention.

### DETAILED DESCRIPTION OF THE EMBODIMENTS

To make the objective, technical solutions, and advantages of the present invention clearer, the following describes the present invention with reference to the accompanying drawings. It should be understood that the embodiments described here are only exemplary ones for illustrating the present invention, and are not intended to limit the present invention.

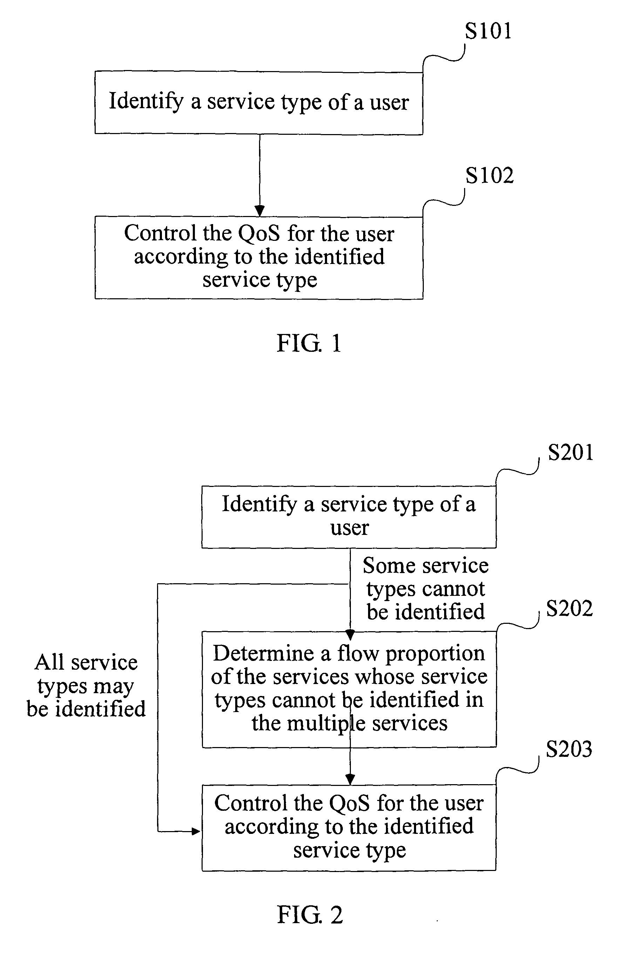

An embodiment of the present invention provides a method for controlling QoS, as shown in FIG. 1. The method may include:

### S101: Identify a service type of a user

In this step, if a service of the user occurs, a network side identifies the service type; or the network side may periodically identify the service type of the user.

There may be multiple methods for identifying the service type of the user, for example, identifying the service type of the user according to an internet protocol packet, an application program, or a flow feature of the user.

Specifically, the identifying the service type of the user according to the internet protocol (Internet Protocol, IP) packet of the user may include: determining the service type through one or more of: source IP address, destination IP address, source port identification, destination port identification, and protocol type in the IP packets. The IP address indicates a source of data, while the protocol type and port identification indicate a service type of the data. Especially, in a TCP/IP protocol system, the port identifications are specified for typical services, and these port identifications are called ominous port identifications.

Some services, for example, a point to point (point to point, P2P) service, may fabricate the port identifications. Therefore, exact service types can be determined through a deep analysis at an application layer. By analyzing the application layer, not only the accuracy of identifying service types may be improved, but also the identification range may be increased. Theoretically, all services may be identified by analyzing the application layer.

Identifying the service type according to the flow feature of the user may include: periodically collecting statistics for the flow and analyzing the flow feature of the user to identify the service type of the user. For example, when the flow of the user is stable, the service type of the user may be identified to be a video service; when the flow of the user is large and fluctuating, the service type may be identified to be a downloading service; and when the flow of the user is low and bursting, the service type may be identified to be a chatting service.

A suitable method may be selected from the preceding methods for identifying the service type according to the actual situation, which is not limited in embodiments of the present invention.
S102: Control the QoS for the user according to the identified service type.

It should be noted that the identified service type may include but are not limited to one or more of: video, Webpage access, E-mail, IP telephone, P2P, unauthorized service, remote login, and instant message.

There may be multiple methods for QoS control for the user, for example, providing a rate guarantee for the services of the user, adjusting service rate of the user, or adjusting service priorities of the user. The preceding control methods include relative control or absolute control, which are not limited in the embodiments of the present invention. In addition, multiple control methods may be used at the same time for the services of the user, as long as the QoS requirements of various service types of services can be satisfied.

Further, the method for providing the rate guarantee for the service of the user may be: setting a guaranteed bit rate (Guaranteed Bit Rate, GBR) for the service, if the GBR of this type of service is not set initially; and increasing the GBR for the service, if a lower GBR is set for this type of service. The method for adjusting service rate of the user may be: reducing the max bit rate (Max Bit Rate, MBR) of the services or reducing service rates using other methods when the service rate need to be limited for the user. It should be noted that in other scenarios, it might be required that the service rate be increased by increasing the MBR. Adjusting service priorities is a relative control method, specifically, to reduce or increase the current priorities by a specified proportion to obtain new priorities.

According to the method provided in embodiments of the present invention, service type of the user can be identified, and QoS for the user can be controlled according to the identified service type, and the QoS may be dynamically adjusted for the user. Therefore, the actual QoS requirement of the service of the user may be satisfied.

The methods provided in the preceding embodiments may be applied to a single service or multiple concurrent services of the user. If multiple services of the user concurrently occur, the QoS for the user may be controlled according to the respective identified service types of the multiple services of the user to implement differentiation management of the multiple services for the user. Further, if multiple services of the user concurrently occur, another embodiment of the present invention provides a method for controlling QoS, as shown in FIG. 2. The method may include:
S201: Identify service types of multiple services of a user.

In this step, reference may be made to the description in step S101 for details about the method for identifying the service types of the multiple services of the user, which is not repeatedly described here. In some circumstances, service types of some services may not be identified (for example, some services use very complicated encryption algorithms). If some service types cannot be identified, step S202 is performed; if all the service types can be identified, step S203 is directly performed.
S202: Determine a flow proportion of the services whose service types cannot be identified in the multiple services.

When the flow proportion of the services whose service types cannot be identified in the multiple services is greater than or equal to a first threshold, the service types of the user may be considered unknown. The QoS for the user may be controlled not according to the service types, and the process ends.

When the flow proportion of the services whose service types cannot be identified in the multiple services is smaller than or equal to a second threshold, the QoS for the user may be controlled according to the identified service types, namely, step S203 is performed.

The preceding first threshold and second threshold may be set according to actual situations. Values of the two thresholds may be the same or different. For example, the value of the first threshold may be 50%, and the value of the second threshold may be 20%.

When the first threshold and the second threshold are different, and the flow proportion of the services whose service types cannot be identified in the multiple services of the user is greater than the second threshold and smaller than the first threshold, the current QoS for the user is kept.
S203: Control the QoS for the user according to the identified service types.

In this step, the QoS of multiple services is controlled respectively according to the service types of the multiple services of the user and then the QoS for the user is obtained according to the QoS of the multiple services. For example, the sum of the GBRs of the multiple services is used as the GBR of the user; and only the rate of a service having the MBRs, instead of all services, is limited.

A detailed description is given as follows by taking the user in which three services concurrently occur, for example. It is assumed that the three services belong to three different types and the three service types of services are respectively a video service, a P2P service, and a Webpage access service. The QoS requirements of different service types of services may be different. For example, rate reduction may be required for some service types of services or a rate guarantee may be required for some service types of services. The QoS of various service types of services may be respectively adjusted by using the manner shown in Table 1.

**Table 1 QoS control for a user using multiple services**

| **Service Type** | **GBR** | **MBR** | **Priority** |
|---|---|---|---|
| Video | 220 kbit/s | | |
| P2P | | 32 kbit/s | -85% |
| Webpage access | | | 50% |

After the QoS of each service is adjusted, the sum of the GBRs of the multiple services may be used as the GBR of the user, and the rate of a service having the MBR needs to be limited.

With the methods provided in this embodiment, differentiation management is implemented of each type of services of the user whose multiple services occur concurrently. Therefore, the actual QoS requirements of the services of the user may be satisfied.

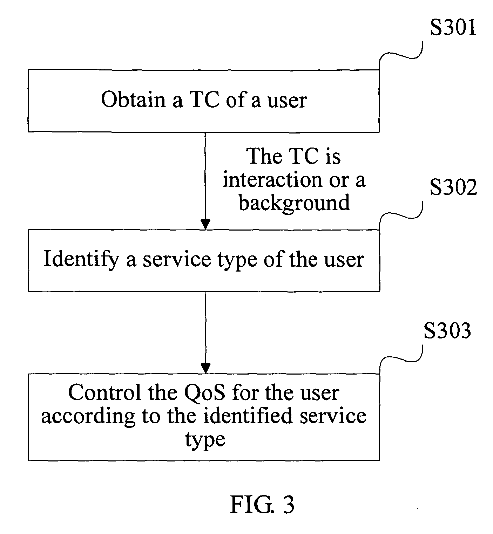

Further, when traffic class (Traffic Classes, TC) of a user is sessions or streaming media, an adjustment to the QoS according to the specific service type of the user may not be necessary, and the QoS for the user may be determined according to subscription information of the user and service requirement when the user access the network (this belongs to the prior art and is not repeatedly described here). With the method provided in embodiments of the present invention, when the TC of the user is another one, for example, the TC is interaction or background, a service type of the user is identified and the QoS is controlled according to the identified service type. Further, another embodiment of the present invention provides a method for controlling QoS, as shown in FIG. 3. The method may include:
S301: Obtain a TC of a user.
   When the TC of the user obtained is interaction or a background, step S302 is performed.
S302: Identify a service type of the user.
   In this step, reference may be made to the description of the preceding embodiments for details about the method for identifying service type of the user.
S303: Control the QoS for the user according to the identified service type.

In this step, reference may be made to the description of the preceding embodiments for details about the method for controlling the QoS, which is not repeatedly described here.

In the prior art, the GBRs are not set for the user whose TC is interaction or background, no GBR is set, in other words, the GBR is set to 0. In this embodiment, the GBRs may be set for the service types of services for which a rate guarantee needs to be provided. In this manner, certain service types of services can be provided with the rate guarantee. The initially determined QoS may not necessarily satisfy the actual QoS requirement of the user. Through the methods for the QoS control provided in embodiments of the present invention, the initially determined QoS may be dynamically adjusted according to different service types. Therefore, the actual QoS requirement of the service of the user may be satisfied.

With reference to the methods provided in FIG. 1, FIG. 2, and FIG. 3, some scenarios where the QoS is adjusted are described in detail as follows.

### 1) Generally, when services of a specified type need to be provided with a rate guarantee, the GBR may be set or adjusted.

For example, when an operator provides a fixed type of service to a fixed IP address, which means that the service type and IP address of a user are bound, the service type of the user may be identified through the source IP address of the IP packets of the user. For example, when an operator provides video services to a fixed IP address, the service type may be identified to be the video service through the source IP address, and the rate of video services is 220 kbps. Therefore, the GBR may be set to 220 kbps, and the details are shown in Table 2.

**Table 2 Setting a GBR**

| **Direction** | **Source IP Address** | **Destination IP Address** | **Protocol Type** | **Source Port ID** | **Destination Port ID** | **GBR** |
|---|---|---|---|---|---|---|
| Downlink | X.X.X.X | | | | | 220 kbps |

In addition, when the service type is identified to be an IP telephone according to an application program, the GBR of the IP telephone service is set to 32 kbps.

In some circumstances, the GBRs of some service types of services may be initially set to small values. If necessary, the GBRs may be increased so that a higher rate guarantee is provided.

### (2) In a scenario where rates of certain services need to be limited, the MBRs of the services may be reduced to replace the initially-set MBRs.

For example, when an operator determines that a website provides unauthorized services (for example, information that are denied access by the government, such as pornographic or reactionary information), and user' access to such websites needs to be denied, the service type of the user may be identified through the destination IP address of IP packets of the user. The MBRs of this type of services may be adjusted to 0 to deny a user' access to such websites. For a specific implementation mode, reference may be made to Table 3.

**Table 3 Adjusting an MBR**

| **Direction** | **Source IP Address** | **Destination IP Address** | **Source Port ID** | **Destination Port ID** | **MBR** |
|---|---|---|---|---|---|
| Upstream | | X.X.X.X | | | 0 kbps |
| Downstream | X.X.X.X | | | | 0 kbps |

### 3) In some scenarios, the QoS for the user may be controlled relatively. For example, the priorities of the user may be adjusted.

For example, when a service type is TCP and the port identification is 23, the service type of the user is generally a remote login service. Compared with other common data services, remote login services are more sensitive to an interaction delay and data flow of this type of services is low. Increasing priorities may guarantee the interaction delay, improve user's satisfaction and cause a less impact on other services. When a service type is TCP and the port identification is 80, the service type of the user is generally a Webpage access. Compared with other common data services, the priorities of this type of services can be increased to obtain a higher throughput, hence improving the user's satisfaction. However, the priorities cannot be set to be too high because flow in such services is relatively high compared with remote login services.

An adjustment to the priority is a relative adjustment. That whether the priorities should be increased or reduced can be determined according to the specific service types and current priorities of the user. The adjustment range is determined according to the actual requirements or stipulations of the operator. For details about detailed adjustment mode, reference may be made to Table 4.

**Table 4 Adjusting a priority**

| **Direction** | **Source IP Address** | **Destination IP Address** | **Protocol Type** | **Source Port ID** | **Destination Port ID** | **Priority** |
|---|---|---|---|---|---|---|
| Uplink | | | TCP | | 23 | +100% |
| Downlink | | | TCP | 23 | | +100% |
| Uplink | | | TCP | | 80 | +50% |
| Downlink | | | TCP | 80 | | +50% |

In addition, the E-mail and P2P services may be identified according to the application programs. As regards the E-mail services, the priority may be reduced by 20%; as regards the P2P services, the priority may be reduced by 85%. In this manner, resources are released to other services.

It should be noted that a QoS adjustment for each type of services may be determined according to the stipulations of operators or the actual requirements. The QoS adjustment for each type of services may be an adjustment to one parameter only (for example, just adjust the priority); or the QoS adjustment for each type of services may be an adjustment to multiple parameters at the same time (for example, adjusting the priority and the MBR at the same time).

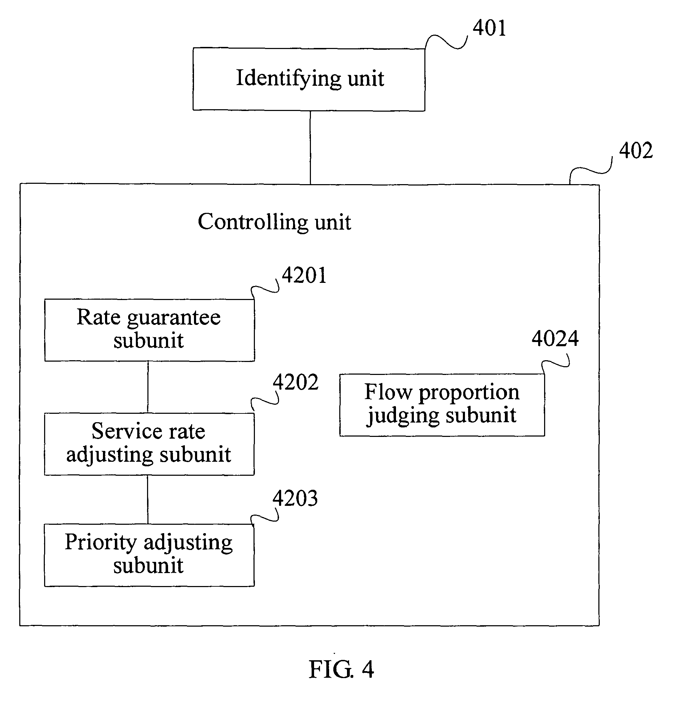

An embodiment of the present invention provides a network device, as shown in FIG. 4. The network device may include: an identifying unit 401 and a controlling unit 402.

The identifying unit 401 is configured to identify a service type of a user.

For details about the method for identifying the service type of the user by the identifying unit 401, reference may be made to the description of the method embodiments, which is not repeatedly described here.

The controlling unit 402 is configured to control QoS for the user according to the service type identified by the identifying unit 401.

Specifically, the identified service type may include but are not limited to one or more of: video, Webpage access, E-mail, IP telephone, P2P, unauthorized service, remote login, and instant message.

Further, the controlling unit 402 may include at least one of the following subunits:
a rate guarantee subunit 4021, configured to provide a rate guarantee to the service of the user according to the service type of the user identified by the identifying unit 401;
a service rate adjusting subunit 4022, configured to adjust service rate of the user according to the service type of the user identified by the identifying unit 401; and
a priority adjusting subunit 4023, configured to adjust a service priority of the user according to the service type of the user identified by the identifying unit 401.

If the multiple services of the user concurrently occur, the controlling unit 402 respectively controls the QoS of the multiple services according to the respective service types of the multiple services of the user and obtains the QoS for the user according to the QoS of the multiple services.

It should be noted that, in some circumstances, service types of some services may not be identified (for example, some services use very complicated encryption algorithms). In this case, the QoS for the user may be controlled according to a flow proportion of the services whose service types cannot be identified in the multiple services. Further, the controlling unit 402 may include:
a flow proportion judging subunit 4024, configured to judge the flow proportion of the services whose service types cannot be identified in multiple services.

When the flow proportion judging subunit 4024 judges that the flow proportion of the services whose service types cannot be identified in the multiple services is greater than or equal to a first threshold, the service types of the user may be considered unknown, and the controlling unit 402 may control the QoS for the user not according to the service types.

When the flow proportion judging subunit 4024 judges that the flow proportion of the services whose service types cannot be identified in the multiple services is smaller than or equal to a second threshold, the controlling unit 402 may control the QoS for the user according to the identified service types

The preceding first threshold and second threshold may be set according to actual situations. Values of the two thresholds may be the same or different. For example, the value of the first threshold may be 50%, and the value of the second threshold may be 20%.

When the first threshold and the second threshold are different, and the flow proportion of the services whose service types cannot be identified in the multiple services is greater than the second threshold and smaller than the first threshold judged by the flow proportion judging subunit 4024, the current QoS for the user is kept.

For details about the working mode of each unit or subunit of network devices provided in this embodiment of the present invention, reference may be made to the description of the methods in the embodiments, which is not repeatedly described here.

According to the network device provided in this embodiment of the present invention, the service type of the user can be identified, the QoS for the user may be controlled according to the identified service types, and the QoS may be dynamically adjusted for the user. Therefore, the actual QoS requirement of the service of the user may be satisfied.

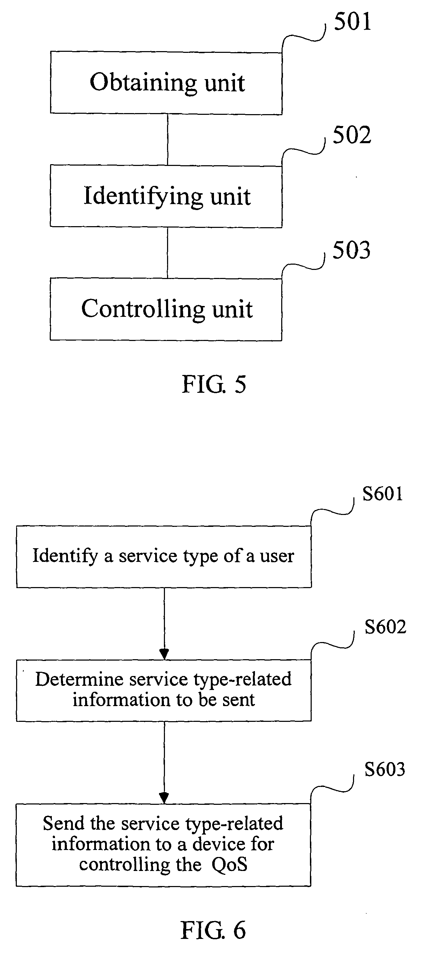

Further, the service type of the user may be identified when the TC of the user is other class (for example, interaction or background), and the QoS for the user can be controlled according to the identified service type. Another embodiment of the present invention provides a network device, as shown in FIG.5. The network device may include: an obtaining unit 501, an identifying unit 502, and a controlling unit 503.

The obtaining unit 501 is configured to obtain a TC of a user. When the TC of the user obtained by the obtaining unit 501 are interaction or background, the identifying unit 502 identifies a service type of the user, and the controlling unit503 controls QoS for the user according to the identified service type.

The functions of the identifying unit 502 and the controlling unit503 are respectively similar to the functions of the identifying unit 401 and the controlling unit 402, which are not repeatedly described here.

The network device in this embodiment may be a radio network controller or a device on a core network. In a long term evolution system, the network device may also be an e-NodeB, as long as the service type of the user may be identified and the QoS for the user may be controlled. In addition, a specific network element (for example, a gateway GPRS support node GGSN), that may be configured to identify the service types, instructs the radio network controller to control the QoS for the user according to the service type after identifying the service type of the user. Specifically, a device for identifying the service type and a device for controlling the QoS may be located on different network elements, for example, the device for identifying the service types is located on the GGSN and the device for controlling the QoS is located in the RNC. The device for identifying the service type sends the determined service type-related information to the device for controlling the QoS.

Another embodiment of the present invention provides a method for controlling QoS, as shown in FIG. 6. The method may include:
S601: Identify a service type of a user.
   In this step, reference may be made to descriptions of the embodiments shown in FIG. 1 or FIG. 2 for the method for identifying of the service type of the user, which is not repeatedly described here.
S602: Determine service type-related information to be sent according to the identified service type.
   The service type-related information includes at least the service type. In addition, other service type-related information may be determined according to the policies of operators according to the identified service type in combination with user subscription information and the current network situation. The other service type-related information includes, for example, service features (such as a priority, delay sensitivity, and bandwidth requirement).
S603: Send the service type-related information to a device for controlling the QoS.

In this step, the device for identifying the service type sends the service type-related information to the device for controlling the QoS so that the device for controlling the QoS controls the QoS for the user according to the service type. For example, the service type-related information may be carried in IP packets and sent to the device for controlling the QoS. Further, IP packet header information (for example, the second byte in the IP packet may be modified according to the determined service type-related information. The service type-related information may be carried by setting different bits in the second byte to 1 or 0, as shown in Table 5.

**Table 5**

| **Service Type Information** | **QQ** | **Chat** | **High Priority** | **High Delay Sensitivity** | **Maximum Bandwidth** |
|---|---|---|---|---|---|
| Second byte | 01000000 | 01000*** | 010***** | 011***** | ***111** |

It should be noted that "*" in Table 5 represents 1 or 0, which is not limited. It should be understood that examples in Table 5 are only a possible expression.

The device for controlling the QoS controls the QoS after receiving the service type-related information. Reference may be made to the descriptions of the embodiments shown in FIG. 1, FIG. 2 and FIG. 3 for details about the method for controlling the QoS, which is not repeatedly described here.

With the method for controlling QoS provided in this embodiment, the service type of the user can be identified, and the service type-related information to be sent is determined according to the identified service type for controlling the OoS for the user. In this way, the QoS may be dynamically adjusted for the user and therefore the actual QoS requirement of the service of the user may be satisfied.

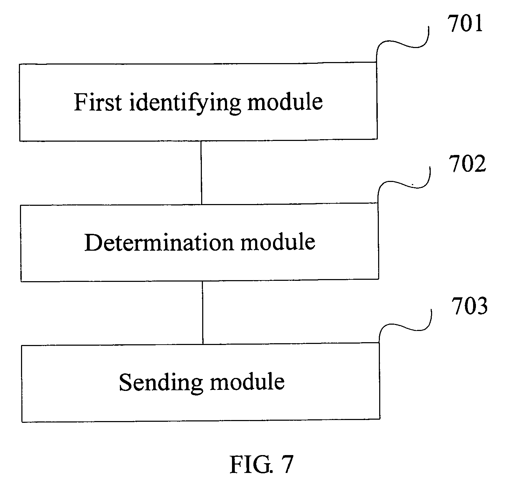

An embodiment of the present invention provides an apparatus for identifying a service type of a user, as shown in FIG.7. The apparatus may include: a first identifying module 701, a determination module 702, and a sending module 703.

The first identifying module 701 is configured to identify a service type of a user.

The determination module 702 is configured to determine service type-related information to be transmitted according to the identified service type.

The service type-related information includes at least the service type. In addition, other service type-related information may be determined according to the policies of operators according to the identified service type in combination with user subscription information and the current network situation. The other service type-related information includes, for example, service features (such as a priority, delay sensitivity, and bandwidth requirement).

The sending module 703 is configured to send the service type-related information to a device for controlling QoS.

Specifically, the service type-related information may be carried in IP packets and sent to the device for controlling the QoS. Further, IP packet header information (for example, the second byte in the packet header) may be modified according to the determined service type-related information and the service type-related information may be sent to the device for controlling the QoS.

Specifically, for details about the working mode of each module in the apparatus for identifying the service type of the user shown in FIG. 7, reference may be made to the description of method embodiments.

Specifically, the apparatus for identifying the service type of the user may be a GGSN, and the device for controlling the QoS may be a radio network controller.

It is understandable to those skilled in the art that the process of the working mode in the preceding embodiments may be implemented by relevant hardware under instructions of a computer program. The program may be stored in a computer readable storage medium. When the program is executed, the corresponding steps of the preceding methods in the embodiments are performed. The storage medium may be a read only memory (ROM), random access memory (RAM), a magnetic disk or a compact disk.

Apparently, those skilled in the art may make various modifications and variations without departing from the spirit and scope of present the invention. If the modifications and variations made to the present invention are within the protection scope of the claims and their equivalent technologies, such modifications and variations are covered in the protection scope of the present invention.

## Claims

1. A method for controlling quality of service, **characterized by** comprising:
identifying a service type of a user; and
controlling the quality of service, QoS, for the user according to the identified service type of the user.

2. The method according to claim 1, wherein before the identifying the service type of the user, the method comprises:
determining that a traffic class, TC, of the user is interaction or background.

3. The method according to claim 1 or 2, wherein the controlling the QoS for the user according to the identified service type of the user comprises at least one of the following manners:
providing a rate guarantee for the service of the user according to the identified service type of the user;
adjusting service rate of the user according to the identified service type of the user; and
adjusting a service priority of the user according to the identified service type of the user.

4. The method according to claim 3, wherein the providing a rate guarantee for the service of the user according to the identified service type of the user comprises:
setting guaranteed bit rate, GBR, for the identified service type of a service; or adjusting the rate to the GBR of the identified service type of a service.

5. The method according to claim 3, wherein the adjusting service rate of the user according to the identified service type of the user comprises:
adjusting a maximum bit rate, MBR, for the identified service type of a service.

6. The method according to claim 3, wherein the adjusting the service priority of the user according to the identified service type of the user comprises:
increasing a priority of a delay-sensitive service in the interaction.

7. The method according to claim 1 or 2, wherein the controlling the QoS for the user according to the identified service type of the user comprises:
if multiple services of the user concurrently occur, controlling the QoS of the multiple services respectively according to the service types of the multiple services of the user; and
obtaining the QoS for the user according to the QoS of the multiple services.

8. The method according to claim 7, wherein the obtaining the QoS for the user according to the QoS of the multiple services comprises:
taking the sum of the GBRs of the multiple services as the GBR of the user.

9. The method according to claim 7, wherein the controlling the QoS for the user according to the identified service type of the user further comprises:
when the service types of some services in the multiple services of the user cannot be identified, controlling the QoS for the user according to the identified service type of a service if a flow proportion of the services whose service types cannot be identified in the multiple services of the user is smaller than or equal to a second threshold.

10. The method according to claim 1, wherein the identifying the service type of the user comprises:
identifying the service type of the user according to internet protocol, IP, packets of the user; or
identifying the service type of the user according to application program of the user; or
identifying the service type of the user according to flow feature of the user.

11. The method according to claim 1, wherein the identified service type comprise at least one of: video, Webpage access, E-mail, IP telephone, point to point , P2P, unauthorized service, remote login, and instant message.

12. The method according to claim 1, wherein a gateway GPRS support node identifies the service type of the user; the gateway GPRS support node determines service type-related information to be sent and send the service type-related information to a radio network controller so that the radio network controller controls the QoS for the user.

13. The method according to claim 12, wherein the sending the service type-related information to the RNCs comprises:
carrying the service type-related information in IP packets and sending the service type-related information to the radio network controller.

14. The method according to claim 13, wherein the carrying the service type-related information in the IP packets comprises: modifying the second byte in the packet header and carrying the service type-related information in the second byte.

15. A network device, **characterized by** comprising:
an identifying unit, configured to identify a service type of a user; and
a controlling unit, configured to control quality of service, QoS, for the user according to the identified service type of the user.

16. The network device according to claim 15, further comprising an obtaining unit, wherein
the obtaining unit is configured to obtain a traffic class, TC, of the user before the identifying unit identifies the service type of the user; and
the identifying unit identifies the service type of the user when the TC of the user obtained by the obtaining unit is interaction or background.

17. The network device according to claim 15 or 16, wherein the controlling unit comprises any one or any combination of the following subunits:
a rate guarantee subunit, configured to provide a rate guarantee to the service of the user according to the identified service type of the user;
a service rate adjusting subunit, configured to adjust service rate of the user according to the identified service type of the user; and
a priority adjusting subunit, configured to adjust a service priority of the user according to the identified service type of the user.

18. The network device according to claim 15 or 16, wherein if multiple services of the user concurrently occur, the controlling unit controls the QoS of the multiple services respectively according to the service types of the multiple services of the user and obtains the QoS for the user according to the QoS of the multiple services.

19. The network device according to claim 18, wherein when the service types of some services in the multiple services of the user cannot be identified, the controlling unit comprises: a flow proportion judging subunit, configured to judge the flow proportion of the services which cannot be identified in the multiple services; and
the controlling unit controls the QoS for the user according to the identified service types when the flow proportion judging subunit judges that the flow proportion of the services whose service types cannot be identified in the multiple services of the user is smaller than or equal to a second threshold.

20. The network device according to claim 15, wherein the network device is a radio network controller, or a device arranged on a core network, or an evolved NodeB, e-NodeB.

21. An apparatus for identifying a service type of a user, **characterized by** comprising:
a first identifying module, configured to identify the service type of the user;
a determination module, configured to determine service type-related information to be sent according to the service type identified by the first identifying unit, wherein the service type-related information comprises at least the service type; and
a sending module, configured to send the service type-related information determined by the determination module to a device for controlling quality of service, QoS.

22. The apparatus according to claim 21, wherein the apparatus is a gateway GPRS support node.
